# EUROPÄISCHE PATENTSCHRIFT

(11) **EP 1 407 903 B1**
(45) Veröffentlichungstag und Bekanntmachung des Hinweises auf die Patenterteilung: **02.08.2006**
(21) Anmeldenummer: 02292503.6
(22) Anmeldetag: 10.10.2002
(51) Int. Cl.: B60H 1/00

(54) **Heizungs- oder Klimaanlage für ein Kraftfahrzeug mit einer Vorrichtung zur Regelung der Luftzufuhr**
Air conditioning unit of a motor vehicle comprising an air distribution device
Appareil de chauffage ou climatisation de véhicule automobile comprenant un dispositif de distribution d'air

(43) Veröffentlichungstag der Anmeldung: 14.04.2004
(73) Patentinhaber: Behr France Rouffach SAS, 68250 Rouffach (FR)
(72) Erfinder: Klein, Henri, 68000 Colmar (FR)
(74) Vertreter: Grauel, Andreas

(56) Entgegenhaltungen:
- EP-A- 0 461 421
- WO-A-01/54933
- DE-A- 10 016 085
- DE-A- 19 501 593
- FR-A- 2 771 343
- US-B1- 6 296 563

## Beschreibung

Die Erfindung betrifft eine Heizungs- oder Klimaanlage mit einer Vorrichtung zur Regelung der Luftzufuhr, insbesondere für ein Kraftfahrzeug, gemäß dem Oberbegriff des Anspruchs 1.

Üblicherweise werden bei Heizungs- oder Klimaanlagen eine Vielzahl von Klappen zur Steuerung der Luftströme vorgesehen. Derartige Heizungs-oder Klimaanlagen lassen jedoch noch Wünsche offen

DE-A-19501593 zeigt eine Heizungsanlage gemäß dem Oberbegriff des Anspruchs 1.

Es ist Aufgabe der Erfindung, eine verbesserte Vorrichtung zur Verfügung zu stellen.

Diese Aufgabe wird gelöst durch eine Heizungs- oder Klimaanlage mit einer Vorrichtung zur Regelung der Luftzufuhr, insbesondere für ein Kraftfahrzeug, mit den Merkmalen des Anspruchs 1. Vorteilhafte Weitergestaltungen sind Gegenstand der Unteransprüche.

Erfindungsgemäß ist eine entsprechende Vorrichtung derart ausgestaltet, dass lediglich eine Klappe vorgesehen ist, die mindestens zwei, insbesondere verdreht zueinander, in einem festen Winkel angeordnete, vorzugsweise näherungsweise rechteckförmige und flache, Bereiche aufweist, welche die für die Lufttemperierung vorgesehenen Luftkanäle in Abhängigkeit von deren Stellung ganz oder teilweise freigibt oder verschließt. Dies bietet insbesondere den Vorteil einer einfachen Regelung über nur ein Stellorgan, beispielsweise einen Stellmotor, über welches die Klappe, d.h. der Öffnungsgrad aller durch die Klappe geregelten Luftkanäle, eingestellt wird. Somit verringert sich der Aufwand zur Regelung, insbesondere bei luftseitig geregelten Heizungs- oder Klimaanlagen. Auch die Montage wird vereinfacht, da nur eine Klappe, d.h. ein Bauteil, eingebaut werden muss. Insbesondere bei zweizonigen Klimaanlagen kann die Klappe auch in Form von zwei separat angesteuerten Klappen ausgebildet sein, wobei jede der Klappen mehrere Luftkanäle verschließen kann.

Erfindungsgemäß ist - in Luftströmungsrichtung gesehen - hinter der Klappe zumindest in einem von einem Teil-Luftstrom durchströmbaren Bereich ein Heizkörper zur Erwärmung der ihn durchströmenden Luft angeordnet. Dabei verlaufen vorzugsweise die Rohre, d.h. insbesondere Flachrohre, in einer zur Achse parallelen Richtung.

Vorzugsweise weist die Klappe drei um ihre Achse verdreht zueinander, in einem festen Winkel angeordnete Bereiche auf. Hierbei sind insbesondere die beiden äußeren Bereiche in einer Ebene angeordnet. Ferner beträgt der Winkel zwischen den Ebenen der einzelnen benachbarten Bereiche 60° bis 90°.

Vorzugsweise bildet ein Bereich, insbesondere der äußere Bereich, die Klappe für die Kaltluftzufuhr bildet, und ein Bereich, insbesondere der mittlere Bereich, die Klappe für die Warmluftzufuhr.

Vorzugsweise ist - in Luftströmungsrichtung gesehen - vor der Klappe zumindest in einem von einem Teil-Luftstrom durchströmbaren Bereich, vorzugsweise in allen Bereichen, ein Verdampfer angeordnet, wobei vorzugsweise die Erstreckung des Verdampfers in einer Richtung parallel zur Achse größer ist als die entsprechende Erstreckung des Heizkörpers.

Vorzugsweise ist der Heizkörper in Einbanlage oberhalb vom Verdampfer, insbesondere in einem nur von einem Teil-Luftstrom durchströmbaren Bereich, angeordnet.

Dies ermöglicht eine Verringerung des Bauraums in der entsprechenden Richtung.

Vorzugsweise ist der Heizkörper nur im mittleren, von einem Teil-Luftstrom durchströmbaren Bereich, angeordnet, wobei es sich hierbei insbesondere um eine dreiteilige Vorrichtung handelt.

Im Folgenden wird die Erfindung anhand zweier Ausführungsbeispiele unter Bezugnahme auf die Zeichnung im Einzelnen erläutert. In der Zeichnung zeigen:
- Fig. 1: eine perspektivische Darstellung einer erfindungsgemäßen Heizungs- oder Klimaanlage mit einer Vorrichtung gemäß dem ersten Ausführungsbeispiel ohne Darstellung des Heizkörpers,
- Fig. 2: eine Schnittdarstellung entlang Linie II-II in Fig. 1,
- Fig. 3: eine Schnittdarstellung entlang Linie III-III in Fig. 1,
- Fig. 4a: eine vereinfachte, perspektivische Darstellung der Klappe, und
- Fig. 4b: eine vereinfachte, perspektivische Darstellung der Klappe gemäß dem zweiten Ausführungsbeispiel.

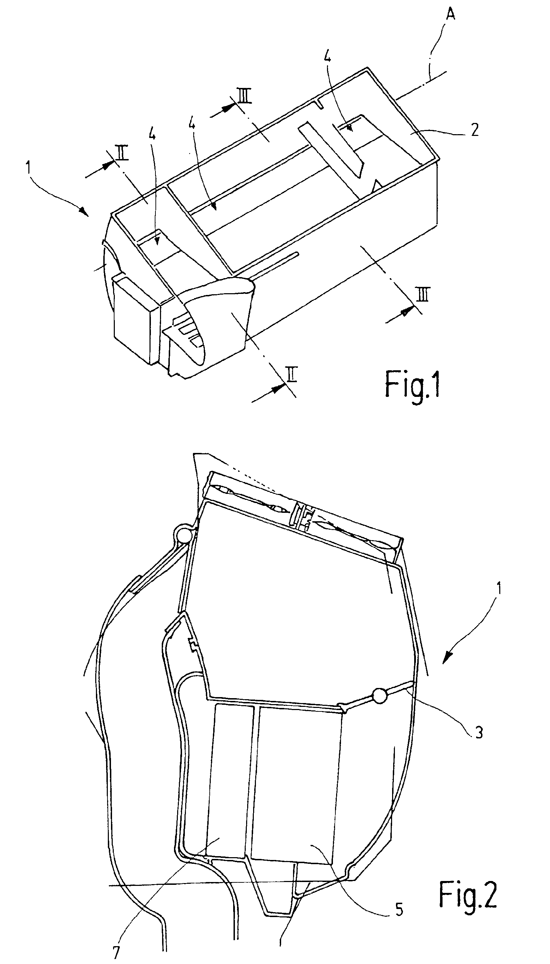

Fig. 1 zeigt eine erfindungsgemäß Heizungs- oder Klimaanlage mit einer Vorrichtung 1 zur Regelung der Luftzufuhr mit einem Gehäuse 2. Das Gehäuse 2 ist derart ausgestaltet, dass die eingehende Luft in drei Teil-Luftströme, welche drei Luftkanäle durchströmen, aufgeteilt und nach entsprechender Temperierung, deren Regelung mittels einer einzigen Klappe 3 erfolgt, einem Sammelraum und anschließend einem weiteren, mittels weiterer Klappen K1, K2, K3 geregelten, dreiteiligen Luftkanalsystem zugeführt wird. Dabei führt das nachfolgende Luft-kanalsystem die Luft zu verschiedenen Luftauslässen, beispielsweise der Fußraumbelüftung, der Windschutzscheibenentfrostung und der Belüftung des Fahrzeuginnenraumes, was schematisch durch Pfeile P1, P2 und P3 angedeutet ist, wobei P1 für die Fußraumbelüftung, P2 die Windschutzscheibenentfrostung und P3 die Belüftung des Fahrzeuginnenraumes steht. Gemäß dem ersten Ausführungsbeispiel handelt es sich um eine einzonige Klimaanlage.

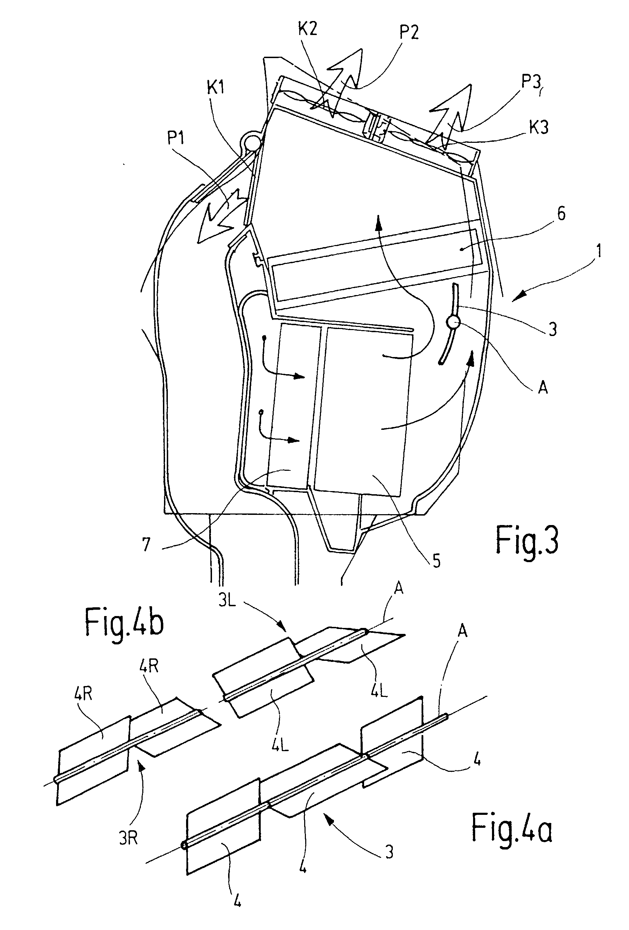

Wie auf Grund der Darstellung von Fig. 4 deutlich zu erkennen ist, ist die Klappe 3 dreiteilig ausgebildet, wobei sie drei zueinander in einem festen Winkel versetzte, näherungsweise rechteckförmige, flache Bereiche 4 aufweist, wobei die beiden äußeren Bereiche 4 in einer Ebene liegen. Die Klappe 3 ist um eine Achse A drehbar, wobei die Achse A etwa durch die Mitte der Bereiche 4 verläuft. Die Achse A gibt auch die Blickrichtung für die Definition der Winkel zwischen den Bereichen 4 vor. Die Klappe 3 wird durch ein einziges Antriebselement angetrieben.

Im Gehäuse 2 sind, wie aus Fig. 2 und Fig. 3 ersichtlich ist, ein Verdampfer 5 und einen Heizkörper 6 angeordnet, wobei sich der Heizkörper 6 ausschließlich über den mittleren Teil des Gehäuses 2, d.h. den vom mittleren Teil-Luftstrom durchströmbaren Bereich, erstreckt, oberhalb vom Verdampfer 5 und - in Strömungsrichtung der Luft gesehen - nach der Klappe 3 angeordnet ist. Der Verdampfer 5 ist - in Strömungsrichtung der Luft gesehen - vor der Klappe 3 angeordnet, wobei er sich entsprechend dem Ausführungsbeispiel über die gesamte Breite des Gehäuses 2 erstreckt. Vor dem Verdampfer 5 ist - in Strömungsrichtung der Luft gesehen - ein Filter 7 angeordnet, der sich ebenfalls über die gesamte Breite des Gehäuses 2 erstreckt und der Filterung der durchströmenden Luft dient.

Der in Fig. 2 dargestellte Schnitt durch einen der beiden seitlichen Teile des Gehäuses 2 entspricht im Wesentlichen dem des nicht dargestellten, anderen seitlichen Teiles des Gehäuses 2.

Gemäß der in Fig. 2 und 3 dargestellten Stellung der Klappe 3 wird ausschließlich der mittlere Bereich durchströmt, d.h. die Luft gelangt vom Filter 7 über den Verdampfer 5 und die im mittleren Teil des Gehäuses 2 vollständig geöffnete Klappe 3 zum Heizkörper 6, wo sie erwärmt wird, weshalb man vom mittleren Luftkanal auch vom Warmluft-Kanal spricht. Die beiden äußeren Luftkanäle sind durch die Klappe 3 verschlossen, so dass keine Kaltluft zur den Warmluft-Kanal durchströmenden Warmluft gelangt, welche dem anschließenden Luftkanalsystem zugeführt wird, und die Luft wird maximal erwärmt.

Wird die Klappe 3 in ihre andere Endstellung gebracht, d.h. der Warmluft-Kanal wird von der Klappe 3 vollständig verschlossen und die beiden anderen Kanäle, von denen man auch als Kaltluft-Kanäle spricht, sind vollständig geöffnet, so gelangt ausschließlich Kaltluft ins anschließende Luftkanalsystem.

Neben den beiden zuvor beschriebenen Endstellungen sind beliebige andere Stellungen der Klappe 3 möglich, so dass beliebige Mischverhältnisse der den Warmluft-Kanal und die Kaltluft-Kanäle durchströmenden Luft möglich sind und eine stufenlose Regelung der Lufttemperatur möglich ist.

Durch die Anordnung von Heizkörper und Verdampfer in Einbanlage übereinander wird in einer Richtung Raum gewonnen. Der Raumgewinn kann noch durch die seitliche Anordnung der den Fußraum mit Luft versorgenden Luftkanäle vergrößert werden, d.h. dass in den Fig. 2 und 3 der von der Klappe K1 verschlossene Luftkanal des nachfolgenden Luftkanalsystems ist oberhalb und/oder unterhalb der Bildebene angeordnet.

Gemäß dem in Fig. 4b dargestellten Ausführungsbeispiel, welches in einer zweizonigen Klimaanlage verwendet wird, besteht die Klappe aus zwei symmetrischen Teilen, im Folgenden als Klappe 3L und Klappe 3R bezeichnet, die auf der gleichen Achse A angeordnet sind. Hierbei weisen beide Klappen 3L und 3R jeweils zwei in einem Winkel zueinander angeordnete Bereiche 4L und 4R auf. Die beiden Klappen 3L und 3R werden von zwei Antriebselementen angesteuert.

### Bezugszeichenliste

1 Vorrichtung
2 Gehäuse
3, 3L, 3R Klappe
4, 4L, 4R Bereich
5 Verdampfer
6 Heizkörper
7 Filter

A Achse
K1, K2, K3 Klappe
P1, P2, P3 Pfeil

## Patentansprüche

1. Heizungs- oder Klimaanlage für ein Kraftfahrzeug mit einer Vorrichtung zur Regelung der Luftzufuhr, mit einem Gehäuse (2), einem Heizkörper (6) und mindestens zwei Luft zuführenden Luftkanälen, die mittels einer um eine Achse (A) schwenk- oder drehbaren Klappe (3) verschließbar sind, wobei durch Bereiche (4; 4L, 4R) der Klappe (3; 3L, 3R) die mindestens zwei Luft zuführenden Luftkanäle regelbar sind **dadurch gekennzeichnet, dass** der Heizkörper (6) in Luftströmungsrichtung gesehen hinter der Klappe (3; 3L, 3R), zumindest in einem von einem Teil-Luftstrom durchströmbaren Bereich angeordnet ist.

2. Heizungs- oder Klimaanlage nach Anspruch 1, **dadurch gekennzeichnet, dass** mindestens zwei, um die Achse (A) verdreht zueinander in einem festen Winkel angeordnete Bereiche (4; 4L, 4R) vorgesehen sind, welche die Luftkanäle in Abhängigkeit von deren Stellung ganz oder teilweise freigeben oder verschließen.

3. Heizungs- oder Klimaanlage nach Anspruch 1 oder 2, **dadurch gekennzeichnet, dass** die Klappe (3) drei um ihre Achse (A) verdreht zueinander, in einem festen Winkel angeordnete Bereiche (4) aufweist.

4. Heizungs- oder Klimaanlage nach Anspruch 2 oder 3, **dadurch gekennzeichnet, dass** der Winkel 60° bis 90° beträgt.

5. Heizungs- oder Klimaanlage nach einem der vorstehenden Ansprüche, **dadurch gekennzeichnet, dass** die beiden äußeren Bereiche (4) in einer Ebene angeordnet sind.

6. Heizungs- oder Klimaanlage nach einem der vorstehenden Ansprüche, **dadurch gekennzeichnet, dass** ein Bereich (4), insbesondere der äußere Bereich (4), die Klappe (3) für die Kaltluftzufuhr bildet, und ein Bereich (4), insbesondere der mittlere Bereich (4), die Klappe (3) für die Warmluftzufuhr bildet.

7. Heizungs- oder Klimaanlage nach einem der vorstehenden Ansprüche, **dadurch gekennzeichnet, dass** zwei getrennt voneinander ansteuerbare Klappen (3L, 3R) auf einer Achse angeordnet sind.

8. Heizungs- oder Klimaanlage nach Anspruch 7, **dadurch gekennzeichnet, dass** mindestens eine der Klappen (3L, 3R) um ihre gemeinsame Achse (A) verdreht zueinander, in einem festen Winkel angeordnete Bereiche (4L, 4L) aufweist.

9. Heizungs- oder Klimaanlage nach Anspruch 8, **dadurch gekennzeichnet, dass** der Winkel 60° bis 90° beträgt.

10. Heizungs- oder Klimaanlage nach einem der vorstehenden Ansprüche, **dadurch gekennzeichnet, dass** die Vorrichtung einen Verdampfer (5) aufweist.

11. Heizungs- oder Klimaanlage nach Anspruch 10, **dadurch gekennzeichnet, dass** der Verdampfer (5) in Luftströmungsrichtung gesehen vor der Klappe (3; 3L, 3R) zumindest in einem von einem Teil-Luftstrom durchströmbaren Bereich angeordnet ist.

12. Heizungs- oder Klimaanlage nach Anspruch 10 oder 11, **dadurch gekennzeichnet, dass** der Heizkörper (6) in Einbanlage oberhalb vom Verdampfer (5), insbesondere in einem nur von einem Teil-Luftstrom durchströmbaren Bereich, angeordnet ist.

13. Heizungs- oder Klimaanlage nach einem der vorstehenden Ansprüche, **dadurch gekennzeichnet, dass** der Heizkörper (6) im mittleren, von einem Teil-Luftstrom durchströmbaren Bereich angeordnet ist.

## Claims

1. An air conditioning unit of a motor vehicle comprising an air distribution device having a housing (2), a heating element (6) and at least two air distribution ducts which can be closed by means of a flap (3) which is able to pivot or rotate about an axis (A), it being possible to control the at least two air distribution ducts with areas (4, 4L, 4R) of the flap (3, 3L, 3R),
**characterised in that**
the heating element (6) is positioned downstream of the flap (3, 3L, 3R) when viewed in the direction of air flow and at least in an area through which a partial air-flow is able to pass.

2. An air conditioning unit in accordance with claim 1,
**characterised in that**
there are provided at least two areas (4, 4L, 4R) positioned at a fixed angle and rotated about the axis (A) in relation to one another which open or close the air ducts either fully or partially dependent on their position.

3. An air conditioning unit in accordance with claim 1 or 2,
**characterised in that**
the flap (3) has three areas (4) which are positioned at a fixed angle and rotated about its axis (A) in relation to one another.

4. An air conditioning unit in accordance with claim 2 or 3,
**characterised in that**
the angle is 60° or 90°.

5. An air conditioning unit in accordance with one of the preceding claims,
**characterised in that**
the two outer areas (4) are positioned in one plane.

6. An air conditioning unit in accordance with one of the preceding claims,
**characterised in that**
one area (4), in particular the outer area (4), forms the cold air distribution flap (3) and one area (4), in particular the central area (4), forms the warm air distribution flap (3).

7. An air conditioning unit in accordance with one of the preceding claims,
**characterised in that**
two flaps (3L, 3R) which can be controlled separately are positioned on one axis.

8. An air conditioning unit in accordance with claim 7,
**characterised in that**
at least one of the flaps (3L, 3R) has areas (4L, 4R) which are positioned at a fixed angle and rotated about their common axis (A) in relation to one another.

9. An air conditioning unit in accordance with claim 8,
**characterised in that**
the angle is 60° or 90°.

10. An air conditioning unit in accordance with one of the preceding claims,
**characterised in that**
the device has an evaporator (5).

11. An air conditioning unit in accordance with claim 10,
**characterised in that**
the evaporator (5) is positioned upstream of the flap (3; 3L, 3R) when viewed in the air flow direction and at least in an area through which a partial air-flow is able to pass.

12. An air conditioning unit in accordance with claim 10 or 11,
**characterised in that**
when fitted the heating element (6) is positioned above the evaporator (5), in particular in an area through which only a partial airflow is able to pass.

13. An air conditioning unit in accordance with one of the preceding claims,
**characterised in that**
the heating element (6) is positioned in the central area through which a partial airflow is able to pass.

## Revendications

1. Système de chauffage ou de climatisation pour un véhicule automobile, comprenant un dispositif servant à la régulation de l'arrivée d'air, un carter (2), un radiateur (6) et au moins deux conduits d'air fournissant de l'air, conduits d'air qui peuvent être fermés au moyen d'un volet (3) orientable ou pivotant autour d'un axe (A), où les conduits d'air, au moins au nombre de deux, fournissant l'air, sont réglables par des zones (4 ; 4L, 4R) du volet (3 ; 3L, 3R), **caractérisé en ce que** le radiateur (6), en regardant dans la direction de l'écoulement d'air, est disposé derrière le volet (3 ; 3L, 3R), au moins dans une zone pouvant être traversée par un flux d'air partiel.

2. Système de chauffage ou de climatisation selon la revendication 1, **caractérisé en ce qu'**il est prévu au moins deux zones (4 ; 4L, 4R) disposées suivant un angle fixe et tournant l'une par rapport à l'autre autour de l'axe (A), zones qui, en fonction de leur position, dégagent ou ferment les conduits d'air, de manière complète ou partielle.

3. Système de chauffage ou de climatisation selon la revendication 1 ou 2, **caractérisé en ce que** le volet (3) présente trois zones (4) disposées suivant un angle fixe et tournant les unes par rapport aux autres autour de leur axe (A).

4. Système de chauffage ou de climatisation selon la revendication 2 ou 3, **caractérisé en ce que** l'angle est compris entre 60° et 90°.

5. Système de chauffage ou de climatisation selon l'une quelconque des revendications précédentes, **caractérisé en ce que** les deux zones extérieures (4) sont disposées dans un plan.

6. Système de chauffage ou de climatisation selon l'une quelconque des revendications précédentes, **caractérisé en ce qu'**une zone (4), en particulier la zone extérieure (4), forme le volet (3) d'arrivée d'air froid, et une zone (4), en particulier la zone centrale (4), forme le volet (3) d'arrivée d'air chaud.

7. Système de chauffage ou de climatisation selon l'une quelconque des revendications précédentes, **caractérisé en ce que** deux volets (3L, 3R) pouvant être commandés séparément l'un de l'autre sont disposés sur un axe.

8. Système de chauffage ou de climatisation selon la revendication 7, **caractérisé en ce qu'**au moins l'un des volets (3L, 3R) présente des zones (4L, 4R) disposées suivant un angle fixe et tournant l'une par rapport à l'autre, autour de leur axe commun (A).

9. Système de chauffage ou de climatisation selon la revendication 8, **caractérisé en ce que** l'angle est compris entre 60° et 90°.

10. Système de chauffage ou de climatisation selon l'une quelconque des revendications précédentes, **caractérisé en ce que** le dispositif présente un évaporateur (5).

11. Système de chauffage ou de climatisation selon la revendication 10, **caractérisé en ce que** l'évaporateur (5), en regardant dans la direction de l'écoulement d'air, est disposé devant le volet (3 ; 3L, 3R), au moins dans une zone pouvant être traversée par un flux d'air partiel.

12. Système de chauffage ou de climatisation selon la revendication 10 ou 11, **caractérisé en ce que** le radiateur (6), une fois monté, est disposé au-dessus de l'évaporateur (5), en particulier dans une zone pouvant être traversée par un flux d'air partiel.

13. Système de chauffage ou de climatisation selon l'une quelconque des revendications précédentes, **caractérisé en ce que** le radiateur (6) est disposé dans la zone centrale pouvant être traversée seulement par un flux d'air partiel.
